# EUROPEAN PATENT SPECIFICATION

(11) **EP 3 568 865 B1**
(45) Date of publication and mention of the grant of the patent: **31.07.2024**
(21) Application number: 18739093.5
(22) Date of filing: 09.01.2018
(51) Int. Cl.: H01F 27/32, H01F 41/04, H01F 41/12, B33Y 80/00

(54) **INSULATION FOR TRANFORMER OR INDUCTOR**
ISOLIERUNG FÜR TRANSFORMATOR ODER INDUKTOR
ISOLATION POUR TRANSFORMATEUR OU BOBINE D'INDUCTION

(30) Priority: 10.01.2017 US 201715402980
(43) Date of publication of application: 20.11.2019
(73) Proprietor: GE Energy Power Conversion Technology Limited, Rugby, Warwickshire CV21 1BD (GB)
(72) Inventor: CIOFFI, Philip, Michael, Niskayuna, NY 12309 (US); CHEN, Qin, Niskayuna, NY 12309 (US); ZHANG, Wei, Niskayuna, NY 12309 (US); RAJU, Ravisekhar, Nadimpalli, Niskayuna, NY 12309 (US)
(74) Representative: Serjeants LLP
(86) International application number: PCT/US2018/012857
(87) International publication number: WO 2018/132340

(56) References cited:
- EP-A1- 1 830 615
- DE-A1- 102013 010 228
- US-A1- 2003 222 751
- US-A1- 2007 115 084
- US-A1- 2010 079 230
- US-A1- 2014 241 012
- US-A1- 2016 035 473
- US-A1- 2016 035 473
- US-A1- 2016 189 862
- US-A1- 2016 358 705

## Description

### BACKGROUND

The subject matter disclosed herein relates to electrical components, and specifically to transformers and inductors.

Transformers typically include primary and secondary windings wrapped around a magnetic core. The primary winding is electrically coupled to an alternating current (AC) power source and the secondary winding is electrically coupled to a load. Based on a ratio of the number of turns in the primary winding to the number of turns in the secondary winding, the transformer may increase or decrease the voltage output by the AC power source.

Inductors typically include a single winding wrapped around a magnetic core. Current through the winding creates a magnetic field. When a current flowing through the winding changes, the magnetic field induces a voltage in the winding, resisting the change in current. Accordingly, an inductor resists changes in the current flowing through it.

Manufacturing inductors and transformers may include purchasing many different components from many different parts suppliers. Because of the small form factor of some inductors and transformers, the various components may have tight tolerances such that obtaining a set of parts that fit together and form a functioning transformer or inductor can be time consuming and expensive. US 2016/0035473 A1 relates to electric coils and method of making electric coil. The coil insulation comprises a solid body with an internal cavity. The solid body insulator can be built using a 3D printer. Conductive materials such as copper, silver, etc. may be used to fill the cavity. The conductive material may be provided in solid, powdered form or in liquid form.

US 2016/0189862 A1 relates to a method of manufacturing a reactor in which a ring core and a bobbin are covered by a plastic cover. The reactor comprises a pair of coils electrically connected in series.

US 2003/0222751 A1 relates to a coil that may be used, for example, as a component of a transformer or as a choke.

### BRIEF DESCRIPTION

Certain embodiments commensurate in scope with the original claims are summarized below. These embodiments are not intended to limit the scope of the claims, but rather these embodiments are intended only to provide a brief summary of possible forms of the claimed subject matter. Indeed, the claims may encompass a variety of forms that may be similar to or different from the embodiments set forth below.

The invention is defined by the appended independent claims. Advantageous embodiments of the invention are given by the dependent claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a schematic of a prior art transformer;
FIG. 2 is a schematic of a prior art inductor;
FIG. 3 is a perspective view of an inductor having a 3D printed insulator, in accordance with an embodiment;
FIG. 4 is a perspective view of the insulator of FIG. 3, in accordance with an embodiment;
FIG. 5 is a perspective view of primary and secondary windings to be formed within the insulator of FIG. 3, in accordance with an embodiment;
FIG. 6 is a detail perspective view of the primary winding of FIG. 5 taken within line 5-5, in accordance with an embodiment;
FIG. 7 is a perspective view of a transformer having a 3D printed insulator, in accordance with an embodiment; and
FIG. 8 is a flow chart of a process for manufacturing the inductor of FIG. 3 or the transformer of FIG. 7, in accordance with an embodiment.

### DETAILED DESCRIPTION

One or more specific embodiments will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Furthermore, any numerical examples in the following discussion are intended to be non-limiting, and thus additional numerical values, ranges, and percentages are within the scope of the disclosed embodiments.

Transformers typically include primary and secondary windings wrapped around a core. Based on a ratio of the number of turns in the primary winding to the number of turns in the secondary winding, the transformer may increase or decrease a voltage of a signal received from an alternating current (AC) power source and providing power to a load. Inductors typically include a single winding wrapped around a magnetic core. Current flowing through the winding creates a magnetic field that resists changes in the current flowing through the winding.

Manufacturing inductors and transformers may include purchasing many different components from many different parts suppliers. Obtaining a set of parts that fit together and form a functioning transformer or inductor can be time consuming and expensive. By manufacturing an insulator that also acts as a mold for the windings, costs and part counts may be kept low, and the complexity of obtaining parts from many different suppliers may be reduced. Further, smaller form factors for electrical components may be achieved.

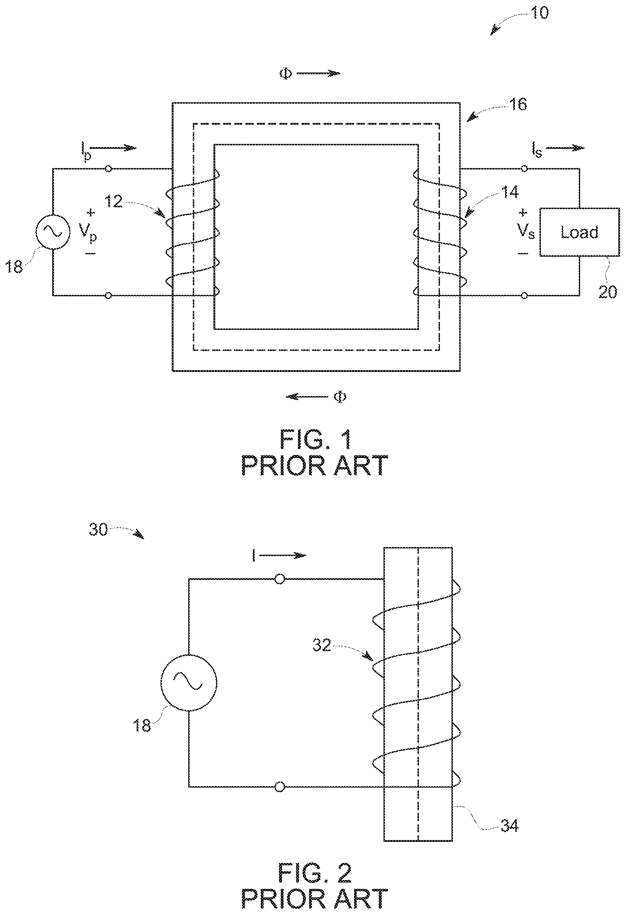

FIG. 1 is a schematic of an exemplary prior art transformer 10. The transformer 10 includes a primary coil 12 and a secondary coil 14 wrapped around opposite sides of a magnetic core 16. In some embodiments, however, ambient air may be used in place of the magnetic core 16. The primary coil 12 is electrically coupled to a alternating current (AC) power source 18, which provides a varying current I_{P} and a primary electromotive force (EMF) or voltage V_{P} that flow through the primary coil 12 and around the core 16. The variable current I_{P} flowing around the core 16 forms a varying magnetic flux φ in the core 16 and a varying magnetic field acting on the secondary coil 14. The varying magnetic field at the secondary coil 14 creates a varying secondary EMF or voltage Vs in the secondary coil 14 via electromagnetic induction, causing a varying current I_{S} to flow to a load 20. The ratio of the primary voltage V_{P} to the secondary voltage V_{S} is equal to the ratio of the number of times N_{P} that the primary coil 12 wraps around the core 16 to the number of time Ns that the secondary coil 14 wraps around the core 16. Accordingly, transformers 10 in which the ratio of N_{P} to Ns is greater than 1 are referred to as step down transformers because Vs is less than V_{P}. Correspondingly, transformers 10 in which the ratio of N_{P} to Ns is less than 1 are referred to as step up transformers because V_{S} is greater than V_{P}. Thus, transformers 10 are commonly used in a vast number of electrical systems to step up or step down voltage in AC power signals. In application, transformers may range from a small component on a circuit board of an electrical consumer product to a multi-ton component in a utility company's power grid.

FIG. 2 is a schematic of an exemplary prior art inductor 30. As shown, the inductor 30 includes a coiled conductor (e.g., winding 32). The winding 32 may or may not be wrapped around a magnetic core 34. That is, in some embodiments, ambient air may be used in place of the magnetic core 34. When connected to the AC power source 18, current, I, flowing through the winding creates a magnetic field around the winding that stores energy. When the current flowing through the winding 32 changes, the magnetic field induces a voltage in the winding 32, resisting the change in current.

Both transformers and inductors typically include many small parts with different characteristics from various parts suppliers. Tight tolerances and small form factors may make it time consuming and expensive to obtain parts that fit together to form a working transformer or inductor. By utilizing additive manufacturing techniques (e.g., 3D printing), an insulator may be formed with a passageway that allows the insulator to be used as a mold for forming the windings. Using such an insulator may help to reduce part count, the number of parts suppliers, the cost of production, and the form factors of transformers, inductors, or other components.

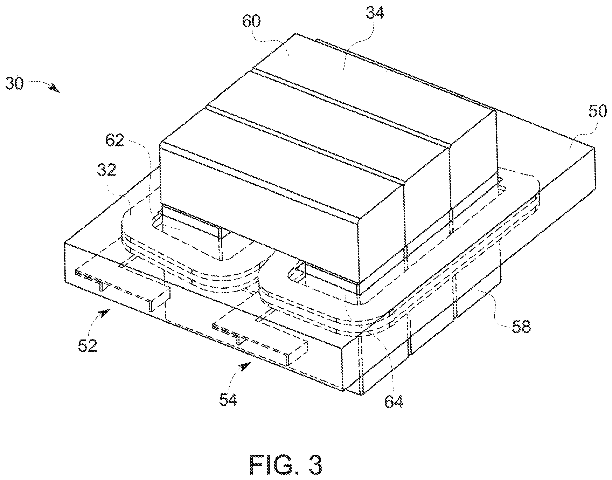

FIG. 3 is a perspective view of an inductor 30 having a 3D printed insulator 50, in accordance with an embodiment. As illustrated, the insulator 50 extends around and through the core 16. The winding 34 extends through a passageway in the insulator 50. In the illustrated embodiment, the inductor 30 may have a first terminal 52 and a second terminal 54. The insulator 50 may be formed by additive manufacturing techniques, such as 3D printing or layered manufacturing. The insulator 50 may be made of a ceramic material, such as alumina, porcelain, etc.

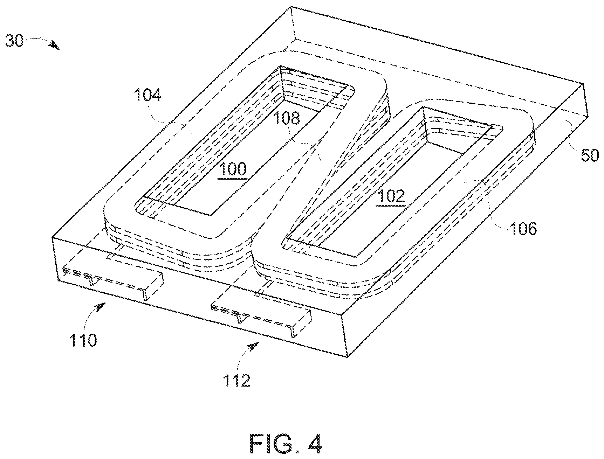

The core 16 may include a first portion 58 and a second portion 60. The first portion 58 may be substantially "U" shaped, having a first leg 62 and a second leg 64. The second portion 60 may be generally "I" shaped. The core 16 may be divided into multiple portions 58, 60 to facilitate assembly of the inductor 30. For example, the first portion 58 may be inserted through apertures in the insulator 50 (see FIG. 4) and then coupled to the second portion 60. It should be understood, however, that other configurations may be possible. For example, the core 16 may have two L-shaped portions. In some embodiments, the core 16 may be a single structure about which the rest of the inductor's 30 or inductor's components are assembled. In the illustrated embodiment, the core 16 is made of ferrite, but cores made of other magnetic materials are also envisaged. In other embodiments, ambient air may be used in place of a magnetic core 16.

As illustrated, the winding 34 extends from the first terminal 52, around the first leg 62 of the core 16 one or more times, then extends around the second leg 64 one or more times to the second terminal 54. It should be understood, however, that the inductor 30 shown in FIG. 3 is one possible embodiment and is not intended to be limiting. Accordingly, many other possible embodiments of the inductor 30 are envisaged.

FIG. 4 is a perspective view of the insulator 50 of FIG. 3. As discussed above with regard to FIG. 3, the insulator 50 may be manufactured of a ceramic material using 3D printing, layered manufacturing, or some other additive manufacturing process. In the illustrated embodiment, the insulator 50 includes first and second apertures 100, 102 through which the core 16 extends (see FIG. 3). A first passage 104 extends through the insulator 50 and around the first aperture 100 one or more times. For example, the first passage 104 may wrap around the first aperture 100 1, 2, 3, 4, 5, 6, 7, 8, 9, 10, or more times. A transition passage 108 connects the first passage 104 to a second passage 106, which extends through the insulator 50 and around the second aperture 102 one or more times. For example, the second passage 106 may wrap around the second aperture 102 1, 2, 3, 4, 5, 6, 7, 8, 9, 10, or more times. In the illustrated embodiment, the first passage 104 extends from an entrance 110 to the transition passage 108 and the second passage 106 extends from the transition passage 108 to an exit 112. The winding 32 may extend from the entrance 110, through the first passage 104, the transition passage 108, and the second passage 106 to the exit.

Once the insulator 50 has been manufactured, the insulator 50 may be used to form the winding 32. In some embodiments, the winding 32 may be formed by filling the passages 104, 106, 108 with molten copper, a copper alloy, or another conductor, and then allow the winding 32 to solidify. In such an embodiment, the winding 32 are solid elements that extend through the passages 104, 106, 108. In another embodiment, electrolysis may be used in an electroplating process, or a multistep electro plating process, to deposit a layer of conductive material (e.g., copper, copper alloy, or some other conductive material) on the walls of the passages 104, 106, 108 to form the winding 32. In such an embodiment, the winding 32 may have a hollow center. Because of the skin effect (i.e., an AC current tends to flow through a conductor toward the exterior of the conductor), a hollow center may not negatively affect the ability of the winding 32 to conduct electricity. Further, the hollow passage may improve the thermal performance of the winding 32. For example, air flowing through the hollow passages of the winding 32 may help in the dissipation of heat from the winding 32. In other embodiments, other materials may be disposed within the winding 32 to aid thermal performance. In further embodiments, liquid or gas fluids may be flowed through the hollow portions of the winding 32 to aid in cooling. In other embodiments, the winding 32 may be include a conductive fluid (e.g., liquid or gas) that may be stagnant in the insulator 50, or may flow through the insulator 50.

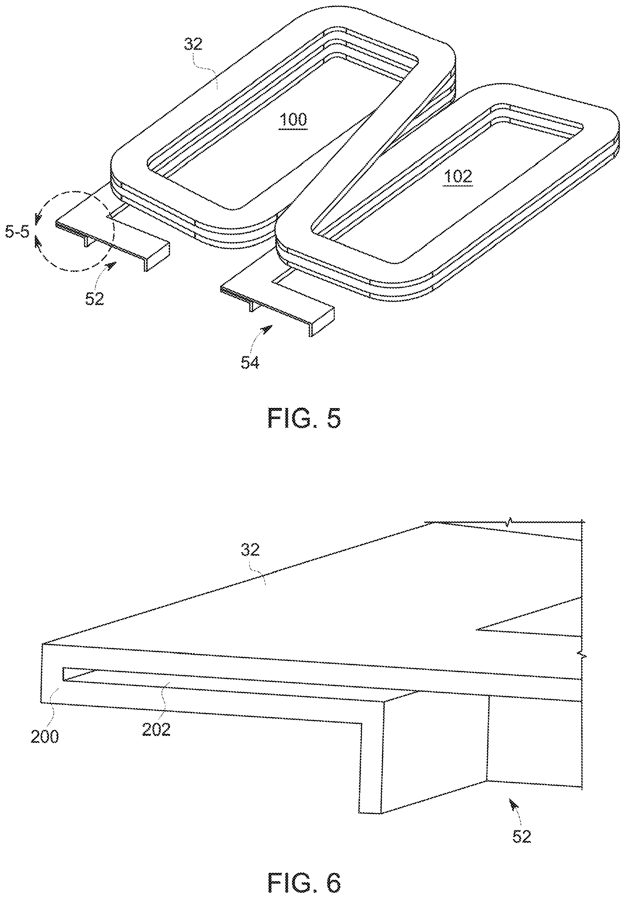

FIG. 5 is a perspective view of the winding 32 of FIG. 3. It should be understood, that the winding 32 is shown in FIG. 5 for clarity, and that in most embodiments, the winding 32 would typically be formed inside the insulator 50. The winding 32 includes the first terminal 52 and the second terminal 54. As previously described, the winding 32 extends from the first terminal 52 and wraps around the first aperture 100 one or more times. The winding then extends around the second aperture 102 in the opposite direction one or more times and proceeds to the second terminal 54.

FIG. 6 is a detail perspective view of the winding 32 taken within line 5-5. In the illustrated embodiment, the winding 32 has been formed by electroplating the interior walls of the passages 104, 106, 108 of the insulator 50 shown in FIG. 4. Accordingly, the winding 32 includes a wall 200 disposed about a hollow passage 202 through the interior of the winding 32. Though the winding 32 is shown having a rectangular cross section, it should be understood that other cross sectional shapes may be possible, such as square, circular, triangular, pentagonal, hexagonal, octagonal, or any other shape. As previously discussed, in the illustrated embodiment, the passage 202 may be left empty to improve the thermal performance of the winding 32 by aiding heat dissipation. In other embodiments, the passage 202 may be filled with a static material. In further embodiments, a liquid or gas fluid (water, coolant, etc.) may be pumped through the passage 202 to aid in heat dissipation (e.g., a heat pump). Though only the first terminal 52 of the winding 32 is shown in FIG. 6, it should be understood that the second terminal 54, and indeed the rest of the winding 32 may have the same or similar geometries.

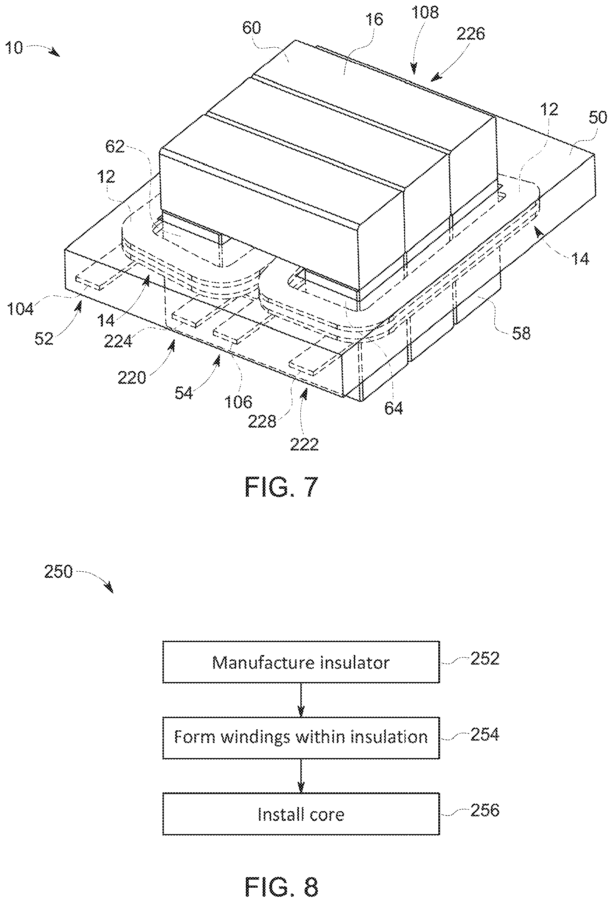

Though FIGS. 3-6 illustrated the disclosed techniques applied to an inductor 30, it should be understood that the same techniques may also be applied to a transformer 10. FIG. 7 is a perspective view of such a transformer 10 having a 3D printed insulator 50, in accordance with an embodiment. As illustrated, the insulator 50 extends around and through the core 16. The primary winding 12 and the secondary winding 14 extend through separate passageways in the insulator 50. For example, in the illustrated embodiment, the AC power source 18 may be electrically coupled to the first and second terminals 52, 54 and the load 20 may be electrically coupled to a third terminal 220 and a fourth terminal 222. As previously described with respect to FIG. 3, the insulator 50 may be formed of a ceramic material (e.g., alumina, porcelain, etc.) by additive manufacturing techniques, such as 3D printing or layered manufacturing.

As with the inductor winding 32 describe with regard to FIGS. 3-6, the primary winding 12 of the transformer 10 may extend from the first terminal 52 and through the first passage 104 around the first leg 62 of the core 16 one or more times. The primary winding 12 then extends through the transition passage 108 and into the second passage 106, around the second leg 64 of the core 16 one or more times, terminating at the second terminal 54. The secondary winding 14 follows a similar, but different, and electrically isolated, path. For example, the secondary winding 14 extends from the third terminal 220 through a third passage 224, around the first leg 62 of the core 16 one or more times, through a second transition passage 226, and through a fourth passage 228 around the second leg 64 of the core 16 one or more times, terminating at the fourth terminal 222. It should be understood that though the third passage 224, the second transition passage 226, and the fourth passage 228 are connected to one another, they are separate from (e.g., electrically isolated), and not connected to, the first passage 104, the transition passage 108, and/or the second passage 106. Accordingly, the primary winding 12 and the secondary winding 14 of the transformer do not contact one another and are not electrically coupled to one another.

The transformer steps up or steps down a voltage of a power signal received from an AC power source connected across the first and second terminals 52, 54, and outputs the stepped up or stepped down voltage to the load connected across the third and fourth terminals 220, 222. It should be understood, however, that the transformer 10 shown in FIG. 3 is one possible embodiment and is not intended to be limiting. Accordingly, many other possible embodiments of the transformer 10 are envisaged.

FIG. 8 is a flow chart of a process 250 for manufacturing a transformer or an inductor. In block 252, the insulator 50 is manufactured via additive manufacturing techniques, such as 3D printing or layered manufacturing. As previously discussed, the insulator 50 is manufactured with a plurality of passages 104, 106, 108, which may be isolated from one another and/or connected to one another, for housing one or more windings 12, 14, 32. For an inductor, the insulator 50 includes multiple passages 104, 106, 108, in fluid communication with one another. For a transformer, the insulator 50 includes multiple sets of continuous passages 104, 106, 108, 224, 226, 228, wherein each set of passages are separate from one another. For example, a first set of passages 104, 106, 108 may be fluidly coupled to one another, but isolated from a second set of passages 224, 226, 228, which are also fluidly coupled to one another.

In block 254, one or more windings 12, 14, 32 may be formed in the one or more passages 104, 106, 108, 224, 226, 228. The windings 12, 14, 32 may be formed by filling the one or more passages 104, 106, 108, 224, 226, 228 with a molten conductor (e.g., copper, a copper alloy, or some other conductor) and allowing the molten conductor to set. In other embodiments, the windings 12, 14, 32 may be formed by electroplating the interior walls of the one or more passages 104, 106, 108, 224, 226, 228. In further embodiments, other techniques may be used to form the windings 12, 14, 32. In embodiments in which the windings 12, 14, 32 include hollow passages 202, the passages 202 may be left unfilled, may be filled with a material, or may be used to flow a liquid or gas fluid through the windings 12, 14, 32.

In block 256, the core 16 may be installed. In some embodiments, the core 16 may also be 3D printed, or formed by some other additive manufacturing process. In such an embodiment, the core 16 may even be formed at the same time, by the same process by which the insulator 50 is formed. As previously described, some embodiments of the electrical component may not have a core 16 at all. As shown and described with regard to FIG. 3, in some embodiments, the core may include a first portion 58 that extends through two or more apertures 100, 102 of the insulator 50. In embodiments in which the insulator 50 has a single aperture 100, the core 16 may only have a single piece. Correspondingly, in some embodiments, the core 16 may include more than two portions 58, 60. It should be understood, however that the core may have a wide variety of shapes beyond those disclosed herein.

Technical effects of the invention include a transformer or inductor having an insulator produced by additive manufacturing techniques. The insulator may include one or more passages in which one or more windings may be formed via molding, electroplating, or some other technique. The disclosed techniques may reduce the part count of a transformer or an inductor and help to reduce the time and cost associated with sourcing many different parts from many different suppliers, and may also reduce the form factor of the component.

This written description uses examples to disclose the subject matter, including the best mode, and also to enable any person skilled in the art to practice the disclosed techniques, including making and using any devices or systems and performing any incorporated methods. The patentable scope of the disclosure is defined by the claims, and may include other examples that occur to those skilled in the art.

## Claims

1. An electrical component (10, 30), comprising:
a magnetic core (16);
a 3D printed insulator (50), comprising:
a first aperture (100) disposed about a first portion (58) of the magnetic core (16);
a first insulator passage (104) extending through the insulator (50), encircling the first aperture (100);
a second aperture (102) disposed about a second portion (60) of the magnetic core (16);
a second insulator passage (106) extending through the insulator (50), encircling the second aperture (102);
a first winding (12, 32) extending through the first insulator passage (104) and configured to conduct an electrical current; and
a first transition passage (108) connecting the first insulator passage (104) to the second insulator passage (106), wherein the first winding (12, 32) extends through the first insulator passage (104) and the second insulator passage (106);
wherein the first insulator passage (104), the first transition passage (108), and the second insulator passage (106) are configured to allow the insulator (50) to act as a mold for forming the first winding (12, 32).

2. The electrical component (10, 30) of claim 1, wherein the insulator (50) comprises:
a third insulator passage (224) extending through the insulator (50), encircling the first aperture (100);
a fourth insulator passage (228) extending through the insulator (50), encircling the second aperture (102); and
a second transition passage (226) connecting the third insulator passage (224) to the fourth insulator passage (228), wherein the third insulator passage (224), the second transition passage (226), and the fourth insulator passage (228) are isolated from the first insulator passage (104), the first transition passage (108), and the second insulator passage (106), and wherein a second winding (14) extends through the third insulator passage (224), the second transition passage (226), and the fourth insulator passage (228).

3. The electrical component (10, 30) of claim 2, wherein the first winding (12, 32) is configured to receive the electrical current from an alternating current AC power source via a first terminal (52) and a second terminal (54).

4. The electrical component (10, 30) of any of claims 2-3, wherein the second winding (14) is configured to output the electrical current to a load via a third terminal (220) and a fourth terminal (222).

5. The electrical component (10, 30) of any of claims 2-4, wherein the first insulator passage (104) encircles the first aperture (100) in a first direction and the second insulator passage (106) encircles the second aperture (102) in a second direction, opposite from the first direction.

6. The electrical component of any of claims 1-5, wherein the electrical component comprises a transformer (10).

7. The electrical component of claims 1-5, wherein the electrical component comprises an inductor (30).

8. The electrical component (10, 30) of any of claims 1-7, further comprising:
a first terminal (52) electrically coupled to a first end of the first winding (12, 32); and
a second terminal (54) electrically coupled to a second end of the first winding (12, 32).

9. A method (250) of manufacturing an electrical component (10, 30), comprising:
3D printing (252) an insulator (50), wherein the insulator (50) comprises:
a first aperture (100) configured to receive a first portion (58) of a magnetic core (16);
a first insulator passage (104) extending through the insulator (50), encircling the first aperture (100);
a second aperture (102) configured to receive a second portion (60) of the magnetic core (16);
a second insulator passage (106) extending through the insulator (50), encircling the second aperture (102); and
a first transition passage (108) connecting the first insulator passage (104) to the second insulator passage (106);
forming (254) a first winding (12, 32) within the first insulator passage (104), the first transition passage (108), and the second insulator passage (106), so that the first winding (12, 32) extends through the first insulator passage (104), the first transition passage (108), and the second insulator passage (106) and is configured to conduct an electrical current, wherein the first insulator passage (104), the first transition passage (108), and the second insulator passage (106) are configured to allow the insulator (50) to act as a mold for forming the first winding (12, 32); and
inserting (256) the first portion (58) of the magnetic core (16) into the first aperture (100) and the second portion (60) of the magnetic core (16) into the second aperture (102).

10. The method (250) of claim 9, wherein forming (254) the first winding (12, 32) within the first insulator passage (104), the first transition passage (108), and the second insulator passage (106) comprises electroplating one or more interior walls of the first insulator passage (104), the first transition passage (108), and the second insulator passage (106).

11. The method (250) of claim 9, wherein forming (254) the first winding (12, 32) within the first insulator passage (104), the first transition passage (108), and the second insulator passage (106) comprises filling the first insulator passage (104), the first transition passage (108), and the second insulator passage (106) with molten copper and allowing the copper to solidify.

## Patentansprüche

1. Elektrische Komponente (10, 30), umfassend:
einen Magnetkern (16);
einen 3D-gedruckten Isolator (50), umfassend:
eine erste Öffnung (100), die um einen ersten Abschnitt (58) des Magnetkerns (16) angeordnet ist;
einen, sich durch den Isolator (50) erstreckenden, ersten Isolatordurchgang (104), der die erste Öffnung (100) umgibt;
eine zweite Öffnung (102), die um einen zweiten Abschnitt (60) des Magnetkerns (16) angeordnet ist;
einen, sich durch den Isolator (50) erstreckenden, zweiten Isolatordurchgang (106), der die zweite Öffnung (102) umgibt;
eine erste Wicklung (12, 32), die sich durch den ersten Isolatordurchgang (104) erstreckt und konfiguriert ist, um einen elektrischen Strom zu leiten; und
einen ersten Übergangsdurchgang (108), der den ersten Isolatordurchgang (104) mit dem zweiten Isolatordurchgang (106) verbindet, wobei sich die erste Wicklung (12, 32) durch den ersten Isolatordurchgang (104) und den zweiten Isolatordurchgang (106) erstreckt;
wobei der erste Isolatordurchgang (104), der erste Übergangsdurchgang (108) und der zweite Isolatordurchgang (106) konfiguriert sind, um zu erlauben, dass der Isolator (50) als eine Form zum Bilden der ersten Wicklung (12, 32) fungiert.

2. Elektrische Komponente (10, 30) nach Anspruch 1, wobei der Isolator (50) umfasst:
einen, sich durch den Isolator (50) erstreckenden, dritten Isolatordurchgang (224), der die erste Öffnung (100) umgibt;
einen, sich durch den Isolator (50) erstreckenden, vierten Isolatordurchgang (228), der die zweite Öffnung (102) umgibt; und
einen zweiten Übergangsdurchgang (226), der den dritten Isolatordurchgang (224) mit dem vierten Isolatordurchgang (228) verbindet, wobei der dritte Isolatordurchgang (224), der zweite Übergangsdurchgang (226) und der vierte Isolatordurchgang (228) von dem ersten Isolatordurchgang (104), dem ersten Übergangsdurchgang (108) und dem zweiten Isolatordurchgang (106) isoliert sind, und wobei sich eine zweite Wicklung (14) durch den dritten Isolatordurchgang (224), den zweiten Übergangsdurchgang (226) und den vierten Isolatordurchgang (228) erstreckt.

3. Elektrische Komponente (10, 30) nach Anspruch 2, wobei die erste Wicklung (12, 32) konfiguriert ist, um den elektrischen Strom von einer Wechselstrom-, AC, Leistungsquelle über einen ersten Anschluss (52) und einen zweiten Anschluss (54) zu empfangen.

4. Elektrische Komponente (10, 30) nach einem der Ansprüche 2-3, wobei die zweite Wicklung (14) konfiguriert ist, um den elektrischen Strom über einen dritten Anschluss (220) und einen vierten Anschluss (222) an eine Last auszugeben.

5. Elektrische Komponente (10, 30) nach einem der Ansprüche 2-4, wobei der erste Isolatordurchgang (104) die erste Öffnung (100) in einer ersten Richtung umgibt und der zweite Isolatordurchgang (106) die zweite Öffnung (102) in einer zweiten Richtung umgibt, die entgegengesetzt zur ersten Richtung verläuft.

6. Elektrische Komponente nach einem der Ansprüche 1-5, wobei die elektrische Komponente einen Transformator (10) umfasst.

7. Elektrische Komponente nach den Ansprüchen 1-5, wobei die elektrische Komponente einen Induktor (30) umfasst.

8. Elektrische Komponente (10, 30) nach einem der Ansprüche 1-7, weiter umfassend:
einen ersten Anschluss (52), der elektrisch mit einem ersten Ende der ersten Wicklung (12, 32) gekoppelt ist; und
einen zweiten Anschluss (54), der elektrisch mit einem zweiten Ende der ersten Wicklung (12, 32) gekoppelt ist.

9. Verfahren (250) zum Herstellen einer elektrischen Komponente (10, 30), umfassend:
3D-Druck (252) eines Isolators (50), wobei der Isolator (50) umfasst:
eine erste Öffnung (100), die konfiguriert ist, um einen ersten Abschnitt (58) eines Magnetkerns (16) aufzunehmen;
einen, sich durch den Isolator (50) erstreckenden, ersten Isolatordurchgang (104), der die erste Öffnung (100) umgibt;
eine zweite Öffnung (102), die konfiguriert ist, um einen zweiten Abschnitt (60) des Magnetkerns (16) aufzunehmen;
einen, sich durch den Isolator (50) erstreckenden, zweiten Isolatordurchgang (106), der die zweite Öffnung (102) umgibt; und
einen ersten Übergangsdurchgang (108), der den ersten Isolatordurchgang (104) mit dem zweiten Isolatordurchgang (106) verbindet;
Bilden (254) einer ersten Wicklung (12, 32) innerhalb des ersten Isolatordurchgangs (104), des ersten Übergangsdurchgangs (108) und des zweiten Isolatordurchgangs (106), so dass sich die erste Wicklung (12, 32) durch den ersten Isolatordurchgang (104), den ersten Übergangsdurchgang (108) und den zweiten Isolatordurchgang (106) erstreckt, und konfiguriert ist, um einen elektrischen Strom zu leiten, wobei der erste Isolatordurchgang (104), der erste Übergangsdurchgang (108) und der zweite Isolatordurchgang (106) konfiguriert sind, um zu erlauben, dass der Isolator (50) als Form zum Bilden der ersten Wicklung (12, 32) fungiert; und
Einsetzen (256) des ersten Abschnitts (58) des Magnetkerns (16) in die erste Öffnung (100) und des zweiten Abschnitts (60) des Magnetkerns (16) in die zweite Öffnung (102).

10. Verfahren (250) nach Anspruch 9, wobei Bilden (254) der ersten Wicklung (12, 32) innerhalb des ersten Isolatordurchgangs (104), des ersten Übergangsdurchgangs (108) und des zweiten Isolatordurchgangs (106) Galvanisieren einer oder mehrerer Innenwände des ersten Isolatordurchgangs (104), des ersten Übergangsdurchgangs (108) und des zweiten Isolatordurchgangs (106) umfasst.

11. Verfahren (250) nach Anspruch 9, wobei Bilden (254) der ersten Wicklung (12, 32) innerhalb des ersten Isolatordurchgangs (104), des ersten Übergangsdurchgangs (108) und des zweiten Isolatordurchgangs (106) Füllen des ersten Isolatordurchgangs (104), des ersten Übergangsdurchgangs (108) und des zweiten Isolatordurchgangs (106) mit geschmolzenem Kupfer und Ermöglichen umfasst, dass das Kupfer erstarrt.

## Revendications

1. Composant électrique (10, 30), comprenant :
un noyau magnétique (16) ;
un isolant imprimé en 3D (50), comprenant :
une première ouverture(100) disposée autour d'une première partie (58) du noyau magnétique (16) ;
un premier passage d'isolant (104) s'étendant à travers l'isolant (50), encerclant la première ouverture (100) ;
une seconde ouverture (102) disposée autour d'une seconde partie (60) du noyau magnétique (16) ;
un deuxième passage d'isolant (106) s'étendant à travers l'isolant (50), encerclant la seconde ouverture (102) ;
un premier enroulement (12, 32) s'étendant à travers le premier passage d'isolant (104) et configuré pour conduire un courant électrique ; et
un premier passage de transition (108) reliant le premier passage d'isolant (104) au deuxième passage d'isolant (106), dans lequel le premier enroulement (12, 32) s'étend à travers le premier passage d'isolant (104) et le deuxième passage d'isolant (106) ;
dans lequel le premier passage d'isolant (104), le premier passage de transition (108) et le deuxième passage d'isolant (106) sont configurés pour permettre à l'isolant (50) d'agir comme un moule pour former le premier enroulement (12, 32).

2. Composant électrique (10, 30) selon la revendication 1, dans lequel l'isolant (50) comprend :
un troisième passage d'isolant (224) s'étendant à travers l'isolant (50), encerclant la première ouverture (100) ;
un quatrième passage d'isolant (228) s'étendant à travers l'isolant (50), encerclant la seconde ouverture (102) ; et
un second passage de transition (226) reliant le troisième passage d'isolant (224) au quatrième passage d'isolant (228), dans lequel le troisième passage d'isolant (224), le second passage de transition (226) et le quatrième passage d'isolant (228) sont isolés du premier passage d'isolant (104), du premier passage de transition (108) et du deuxième passage d'isolant (106) et dans lequel un second enroulement (14) s'étend à travers le troisième passage d'isolant (224), le second passage de transition (226) et le quatrième passage d'isolant (228).

3. Composant électrique (10, 30) selon la revendication 2, dans lequel le premier enroulement (12, 32) est configuré pour recevoir le courant électrique en provenance d'une source d'alimentation en courant alternatif, CA, par le biais d'une première borne (52) et d'une deuxième borne (54).

4. Composant électrique (10, 30) selon l'une quelconque des revendications 2-3, dans lequel le second enroulement (14) est configuré pour délivrer le courant électrique à une charge par le biais d'une troisième borne (220) et d'une quatrième borne (222).

5. Composant électrique (10, 30) selon l'une quelconque des revendications 2-4, dans lequel le premier passage d'isolant (104) encercle la première ouverture (100) dans une première direction et le deuxième passage d'isolant (106) encercle la seconde ouverture (102) dans une seconde direction, opposée à la première direction.

6. Composant électrique selon l'une quelconque des revendications 1-5, dans lequel le composant électrique comprend un transformateur (10).

7. Composant électrique selon les revendications 1-5, dans lequel le composant électrique comprend un inducteur (30).

8. Composant électrique (10, 30) selon l'une quelconque des revendications 1-7, comprenant en outre :
une première borne (52) couplée électriquement à une première extrémité du premier enroulement (12, 32) ; et
une deuxième borne (54) couplée électriquement à une seconde extrémité du premier enroulement (12, 32).

9. Procédé (250) de fabrication d'un composant électrique (10, 30), comprenant :
l'impression 3D (252) d'un isolant (50), dans lequel l'isolant (50) comprend :
une première ouverture (100) configurée pour recevoir une première partie (58) d'un noyau magnétique (16) ;
un premier passage d'isolant (104) s'étendant à travers l'isolant (50), encerclant la première ouverture (100) ;
une seconde ouverture (102) configurée pour recevoir une seconde partie (60) du noyau magnétique (16) ;
un deuxième passage d'isolant (106) s'étendant à travers l'isolant (50), encerclant la seconde ouverture (102) ; et
un premier passage de transition (108) reliant le premier passage d'isolant (104) au deuxième passage d'isolant (106) ;
la formation (254) d'un premier enroulement (12, 32) à l'intérieur du premier passage d'isolant (104), du premier passage de transition (108) et du deuxième passage d'isolant (106) de telle sorte que le premier enroulement (12, 32) s'étende à travers le premier passage d'isolant (104), le premier passage de transition (108) et le deuxième passage d'isolant (106) et soit configuré pour conduire un courant électrique, dans lequel le premier passage d'isolant (104), le premier passage de transition (108), et le deuxième passage d'isolant (106) sont configurés pour permettre à l'isolant (50) d'agir comme un moule pour former le premier enroulement (12, 32) ; et
l'insertion (256) de la première partie (58) du noyau magnétique (16) dans la première ouverture (100) et de la seconde partie (60) du noyau magnétique (16) dans la seconde ouverture (102).

10. Procédé (250) selon la revendication 9, dans lequel la formation (254) du premier enroulement (12, 32) à l'intérieur du premier passage d'isolant (104), du premier passage de transition (108) et du deuxième passage d'isolant (106) comprend la galvanoplastie d'une ou de plusieurs parois intérieures du premier passage d'isolant (104), du premier passage de transition (108) et du deuxième passage d'isolant (106).

11. Procédé (250) selon la revendication 9, dans lequel la formation (254) du premier enroulement (12, 32) à l'intérieur du premier passage d'isolant (104), du premier passage de transition (108) et du deuxième passage d'isolant (106) comprend le remplissage du premier passage d'isolant (104), du premier passage de transition (108) et du deuxième passage d'isolant (106) avec du cuivre fondu et le fait de laisser le cuivre se solidifier.
